Europäisches Patentamt

European Patent Office

Office européen des brevets

(19)

(11) Veröffentlichungsnummer: **0 219 594 B1**

(12) # EUROPÄISCHE PATENTSCHRIFT

(45) Veröffentlichungstag der Patentschrift: **12.06.91**

(51) Int. Cl.⁵: **F15B 15/26, B23B 31/26**

(21) Anmeldenummer: **86103139.1**

(22) Anmeldetag: **08.03.86**

(54) **Druckmittelbetätigte Einrichtung.**

(30) Priorität: **23.10.85 DE 3537687**

(43) Veröffentlichungstag der Anmeldung:
**29.04.87 Patentblatt 87/18**

(45) Bekanntmachung des Hinweises auf die
Patenterteilung:
**12.06.91 Patentblatt 91/24**

(84) Benannte Vertragsstaaten:
**AT BE CH DE FR GB IT LI NL**

(56) Entgegenhaltungen:
**DE-A- 2 360 337**
**DE-A- 2 911 071**
**DE-A- 3 018 920**
**DE-A- 3 317 487**
**FR-A- 2 540 194**

(73) Patentinhaber: **Klement, Klaus, D.**
**St. Mauri-Strasse 1**
**W-5170 Jülich-Bourheim(DE)**

(72) Erfinder: **Klement, Klaus, D.**
**St. Mauri-Strasse 1**
**W-5170 Jülich-Bourheim(DE)**

(74) Vertreter: **Becker, Thomas, Dr., Dipl.-Ing. et al**
**Patentanwälte Becker & Müller Eisenhütten-**
**strasse 2**
**W-4030 Ratingen 1(DE)**

# Beschreibung

Die Erfindung betrifft eine druckmittelbetätigte Spanneinrichtung.

In vielen Fällen ist es erforderlich, axiale Kräfte zu erzeugen und aufrechtzuerhalten. Erforderlich ist dies zum Beispiel bei Werkzeugschäften, mit denen Werkzeuge in einem Werkzeugwechselmagazin einer Werkzeugmaschine aufgenommen werden. Diese Werkzeuge sollen, wenn sie in die entsprechenden Aufnahmeeinrichtungen eingeführt worden sind, dort in axialer Richtung möglichst spielfrei und sicher gehalten werden, so daß ihre Haltesicherung auch dann bestehen bleibt, wenn beispielsweise elektrische oder hydraulische Betätigungsmittel ausfallen.

Aus der DE-A-3317 487 ist ein System zur Zwangsverriegelung für Kolben von Druckmittezylindern in deren Endstellung bekannt. Es besteht aus mehreren Verriegelungsstücken, die zwischen einer Führungsstellung und einer Verriegelungsstellung bewegbar sind und dabei in der Führungsstellung flächig gegen die Umfangsfläche einer mit dem Kolben verbundenen Kolbenstange anliegen. Erst in dem Moment, in dem am Hubende ein radialer Ringkanal der Kolbenstange in den Bereich der Verriegelungsstücke gelangt, bewirkt ein in Richtung auf die Verriegelungsstücke axial druckbelasteter Kolben eine radiale Bewegung der Verriegelungsstücke in den radialen Ringkanal der Kolbenstange. Die Verriegelung erfolgt über eine zur Kolbenachse geneigte Arretierfläche zwischen dem Verriegelungskolben und den Verriegelungsstücken. Die auf dem Verriegelungskolben ruhende Last preßt die Verriegelungsstücke spielfrei gegen eine zur Kolbenachse geneigte, korrespondierende Sperrfläche im Bereich des Ringkanals, wodurch auf die Kolbenstange eine zusätzliche, axial gerichtete Kraft erzeugt und der Kolben in der Endstellung auch bei Druckausfall sicher verriegelt wird.

Der Erfindung liegt die Aufgabe zugrunde , eine druckmittelbetätigte Spanneinrichtung vorzuschlagen, mit der es möglich wird, eine Zugstange in axialer Richtung mechanisch sicher zu halten, wobei die hierzu angewendete Einrichtung gleichzeitig in der Lage sein muß die Zugstange um mindestens einen kleinen Betrag axial zu bewegen.

Diese Aufgabe wird durch die Merkmale des Anspruchs 1 gelöst. Hierdurch gelingt es, mit einer Spannhubbewegung des Kolbens über dessen geneigte innenseitige Fläche die radial beweglichen Elemente radial nach innen zu treiben, wodurch über die korrespondierende Schrägfläche an der Zugstange diese axial bewegt wird, bis die Elemente beispielsweise an einem Anschlag zur Anlage kommt. Eine Weiterbewegung der Zugstange ist dann nicht mehr möglich, es wird jedoch gleichzeitig die Zugkraft aufrechterhalten. Wegen des Winkels der Fläche am genannten Kolben, der kleiner als der Selbsthemmungswinkel ist, ist hierfür irgendeine weitere Beaufschlagung des Kolbens mit einem Mittel, das auf den Kolben in axialer Richtung Kraft ausübt, nicht mehr erforderlich. Der Kolben behält seine Lage bei und es wird auch die Spannkraft beibehalten. Gleichzeitig besteht hierdurch eine absolut sichere mechanische Arretierung.

Nach einer Ausgestaltung der Erfindung wird vorgeschlagen, daß der Kolben in Spannrichtung federbelastet ist. Dies hat den Vorteil, daß bei einer noch zu beschreibenden Konstruktionsvariante die Zugstange nur um einen entsprechenden Betrag in die Einrichtung hineingeschoben werden muß, was beispielsweise auch manuell geschehen kann, um die gesamte Einrichtung auszulösen und den Einzieh-, Spann- und Haltevorgang mechanisch in Gang zu setzen.

Weiterhin wird vorgeschlagen, daß der Kolben mindestens in Löserichtung von einem Strömungsmedium beaufschlagbar ist. Hierdurch wird einerseits eine bequeme und sichere Lösebewegung erreicht, andererseits aber eine sichere Vorspannung und Arretierung beibehalten wenn Strömungsmittel, aus welchem Grund auch immer, nicht zur Verfügung steht.

Nach einer weiteren Ausgestaltung der Erfindung wird vorgeschlagen, daß koaxial zur Zugstange ein weiteres Element unter axialer Vorlast gegen die Zugstange axial verschiebbar in das Zylindergehäuse zurflächigen Anlage mit seiner Stirnfläche an der korrespondierenden Stirnfläche der Zugstange hineinragt, wobei das weitere Element mindestens eine Fläche zur Abstützung der radial beweglichen Elemente aufweist. Hierdurch wird es möglich, bei der Lösebewegung die radial beweglichen Elemente radial so weit nach außen gleiten zu lassen, daß die Zugstange vollständig entfernt werden kann. Zur dann notwendigen Abstützung der radial beweglichen Elemente dient dann das weitere, koaxial zur Zugstange angeordnete Element. Gleichzeitig gelingt es hierdurch im Zusammenhang mit dem vorbeschriebenen, über elastische Elemente in Spannrichtung vorbelasteten Kolben durch einfaches Hineinschieben der Zugstange in die Einrichtung die Einrichtung auszulösen und die gewünschte Spann- und Arretierbewegung mit der gewünschten Spannkraft zu bewirken.

Eine weitere Ausgestaltung der Erfindung sieht vor, daß die beweglichen Elemente als Kugeln oder Kreisringsegmente gestaltet sind. Dies sind die hierfür denkbar einfachsten Bauelemente, die außerdem als Serienprodukt im Handel erhältlich sind oder einfach zu fertigen sind. Die Kreisringsegmente weisen dann je eine äußere Fläche, die mit der Fläche des Kolbens zusammenarbeitet, sowie eine weitere Fläche auf, die mit der Fläche an der Zugstange zusammenarbeitet. Diese Elemente sind zwar aufwendiger als zum Beispiel Kugeln , erlauben aber wegen ihrer größeren Flächenanlage höhere Zugkräfte und ermöglichen größere Haltekräfte.

Bildet die Querschnittslinie der äußeren Fläche der Kreisringsegmente im äußersten Bereich zur Verschieberichtung der Zugstange einen Winkel kleiner als der Selbsthemmungswinkel, dem sich ein Bereich stärkerer Neigung anschließt, gelingt es, die Einzugsbewegung der Zugstange anfangs etwas rascher, jedoch mit geringerer Kraft zu bewirken und die notwendige Spannkraft erst im letzten Hubbereich bei entsprechend kleiner Hubgeschwindigkeit zu erzeugen.

Eine ergänzende Ausgestaltung der Erfindung sieht vor, daß die innere Fläche des Kolbens in Löserichtung einen größer werdenden Radialabstand zur Mantellinie der Zugstange aufweist. Dies ist eine günstige Neigungsrichtung dieser Fläche und ermöglicht einen einfachen konstruktiven Aufbau der Gesamteinrichtung.

Eine andere Ausgestaltung sieht vor, daß die innere Mantellinie des Kolbens einen hyperbelartigen Verlauf aufweist. Hierdurch gelingt es für die Anfangsbewegung die axiale Länge des Kolbens zu verkleinern.

Wenn in jeder radialen Außenlage der radial beweglichen Elemente die Tangente im Berührungspunkt von innerer Fläche des Kolbens und äußerer Fläche eines Segmentes mit der Senkrechten zur Mittellinie einen Winkel bildet, der größer als der Selbsthemmungswinkel ist, so daß bei einer Axialbewegung des Kolbens eine Radialbewegung des Segmentes erfolgt, wird sichergestellt, daß in jeder Situation eine Radialbewegung der entsprechenden Elemente erfolgen kann, so daß besondere Maßnahmen für die Bewegungseinleitung der Radialbewegung der entsprechenden Elemente unnötig sind.

Vorzugsweise umfaßt die Einrichtung eine Hubbegrenzung für den Kolben. Es ist dann möglich zum Beispiel mit einer äußeren elastischen Gegenanlage, die Einzugskraft zu begrenzen. Ebenso kann der Einzugshub hierdurch begrenzt werden.

Ergänzend wird nach der Erfindung noch vorgeschlagen, daß eine Hubbegrenzung vorgesehen ist für eine solche Kolbenlage, in der die radial beweglichen Elemente in ihrer äußersten radialen Lage noch eine Teilüberdeckung mit der radial nach innen gerichteten Fläche der Zugstange aufweisen. Hierdurch kann erreicht werden, daß die Zugstange zwar gelöst ist und eine Einzugskraft nicht mehr besteht, daß aber die Zugstange dennoch aus der Einrichtung nicht entfernt werden kann. Dies ist immer dann wünschenswert, wenn mit der erfindungsgemäßen Einrichtung eine andere Einrichtung betätigt werden soll. Die erfindungsgemäße Einrichtung ist dann als komplette Baueinheit einsetzbar.

Dabei ist es besonders vorteilhaft, wenn die Hubbegrenzung vom Zylinderboden des Zylindergehäuses gebildet wird und einstellbar ist. Durch die Einstellbarkeit der Hubbegrenzung kann die Einrichtung unterschiedlichsten Aufgaben angepaßt werden.

In bestimmten Fällen kann es günstig sein, den Spannkolben in beiden Richtung mit einem Strömungsmedium zu beaufschlagen, wodurch auf einfache Weise Kraft und Geschwindigkeit des Spannkolbens geregelt werden können. Es kann aber auch wünschenswert sein, daß der Spannhub über ein Strömungsmedium bewirkt wird und daß bei Ausfall des Strömungsmediums ein sofortiges Lösen der Einrichtung angestrebt wird. All dies ist mit den beschriebenen Varianten problemlos möglich.

Wird die Zugstange als Kolbenstange einer fluidbetätigten Kolben-Zylinder-Einheit ausgebildet, wird es möglich, in einer gewünschten Kolbenlage dieser Einheit die Kolbenstange dieser Einheit von der erfindungsgemäßen Einrichtung betätigen zu lassen. Dies ist zum Beispiel wünschenswert bei den Schließzylindern von Kunststoffspritzwerkzeugen. Haben solche Schließzylinder eine doppelte Kolbenstange, so kann das freie Ende der zweiten Kolbenstange so ausgebildet sein wie die Zugstange der erfindungsgemäßen Einrichtung. In Schließlage könnte dann die erfindungsgemäße Einrichtung diese zweite Kolbenstange erfassen und zum Beispiel eine dauernde Schließkraft erzeugen.

Die Erfindung soll nun anhand der beigefügten Zeichnungen, die Ausführungsbeispiele zeigen, näher erläutert werden.

Es zeigen:

Figur 1     Ansicht X nach Figur 2
Figur 2     Längsschnitt durch eine erfindungsgemäße Einrichtung
Figur 3     Ansicht Y nach Figur 2
Figur 4     Längsschnitt durch eine Konstruktionsvariante
Figur 5     Einzelansicht aus Figur 4

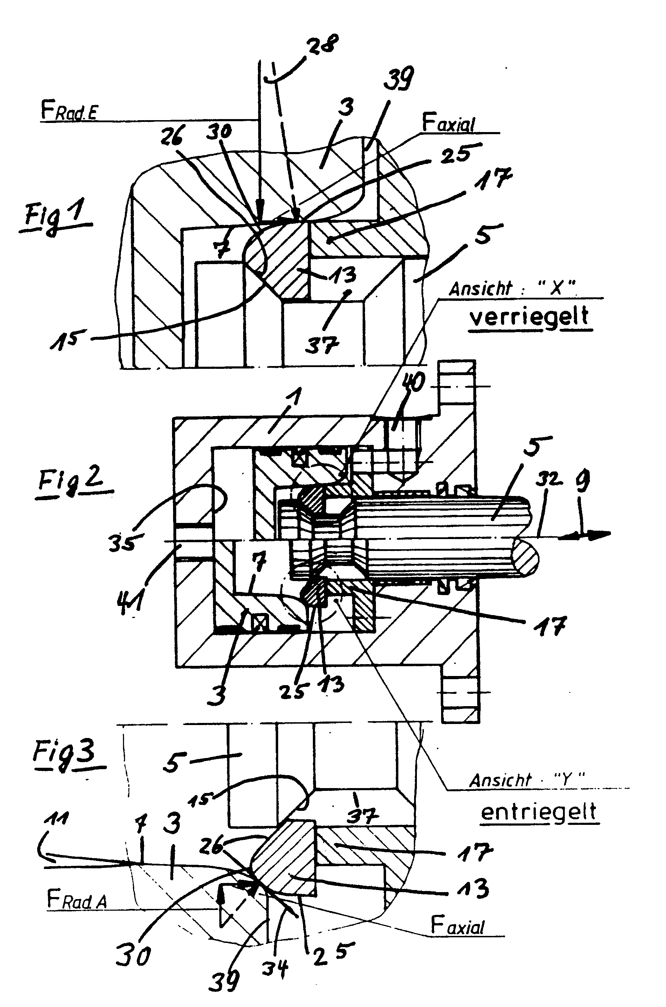

Die Figur 2 zeigt einen Längsschnitt durch eine erfindungsgemäße Einrichtung, wobei die obere Hälfte des Längsschnitts die Verriegelungsstellung und die untere Hälfte des Längsschnitts die Entriegelungsstellung darstellt.

In einem Zylindergehäuse 1 ist ein Kolben 3 gleitend geführt und in üblicher Weise über Dichtringe und Gleitringe gegen die Zylinderwandung des Zylindergehäuses 1 abgedichtet. Im Zylindergehäuse 1 ist eine Zugstange 5 in Richtung des Pfeils 9 koaxial zur Mittellinie 32 angeordnet und verschieblich. Die Zugstange 5 kann hierbei, wie ansonsten bei einer Kolbenstange eines Strömungsmittelzylinders üblich, im Zylindergehäuse 1 geführt und abgedichtet sein. Das in den Zylinderraum des Zylindergehäuses 1 hineinragende Ende der Zugstange 5 weist einen Ringkanal 37 auf, der mindestens endseitig von einer radial nach innen gerichteten, vorzugsweise geneigten Fläche 15 begrenzt ist. Diese geneigte Fläche bildet infolge ihrer Neigung die Mantelfläche eines Kegelstumpfes. Gegen diese Mantelfläche 15 sind radial bewegliche Elemente 13, vorzugsweise als Ringsegmente ausgebildet, mit einer entsprechend geneigten Fläche 26 angelegt. Die Neigungswinkel der Flächen sind hierbei so bemessen, daß eine Bewegung der Zugstange 5 in Richtung des Pfeils 9 eine radial gerichtete Bewegung der radial beweglichen Elemente auslöst. Besonders einfach ist dies wenn die radial gerichteten Elemente 13 als Kugeln ausgebildet sind.

In ihrer axialen Positionen werden die radial beweglichen Elemente durch Abstützmittel 17 gehalten. Diese können, wie die Figur 2 deutlich zeigt, als Innenflansch ausgebildet sein, wobei dieser Innenflansch an einer inneren Stirnseite des Zylindergehäuses 1 angeordnet und mit einer ringförmigen Erhöhung als Abstandshalter ausgestattet ist. Hiergegen stützen sich dann die radial beweglichen Elemente 13 in axialer Richtung ab. Der Abstützring der Abstützmittel 17 ist hierbei so bemessen, daß er in der Lage, in der die radial beweglichen Elemente 13 am weitesten radial nach innen gefahren sind, die äußere Umhüllungsfläche der radial beweglichen Elemente 13 nicht überschreitet. Dies zeigt die Ausschnittsvergrößerung nach Figur 1 besonders deutlich.

Der Kolben 3 weist einen inneren Hohlraum auf, in welchen das Ende der Zugstange 5 hineinragt. Der innere Hohlraum ist in radialer Richtung begrenzt durch eine über eine bestimmte Länge in axialer Richtung sich erstreckende kegelige Fläche 7, deren Neigungswinkel 11 zur Mittellinie 32 einen Winkel kleiner als der Selbsthemmungswinkel bildet. Im vorderen Endbereich vergrößert sich dann dieser Winkel, so daß diese Fläche in ihrem Querschnitt in einem hyperbelartigen Verlauf in die Stirnfläche 39 des Kolbens 3 übergeht.

Auch das radial bewegliche Element 13, soweit es als Kreisringsegment ausgebildet ist, weist eine mit der Fläche 7 des Kolbens 3 zusammenwirkende äußere Fläche 25 auf, die zunächst den gleichen Neigungswinkel aufweist wie der Winkel 11 der Fläche 7 des Kolbens 3. In Richtung des Kolbens geht dann die Neigung der äußeren Fläche 25 in einen Bereich 30 stärkerer Neigung über.

Der innere Hubbereich des Zylindergehäuses 1 für den Kolben 3 wird begrenzt durch den inneren Zylinderboden 35, gegen den der Kolben 3 in äußerster Lösestellung zur Anlage kommt, wie die untere Hälfte der Figur 2 dies zeigt. Wird in dieser Stellung gleichzeitig durch eine äußere Zugkraft die Zugstange 5 belastet, so werden hierdurch die radial beweglichen Elemente, gleichgültig ob Kugeln oder -wie dargestellt- Kreisringsegmente, radial nach außen getrieben, weil eine Axialbewegung durch die Abstützmittel 17 verhindert wird. Die radiale Auswärtsbewegung wird in radialer Richtung gestoppt vom Kolben 3, der ja, wie die untere Hälfte der Figur 2 zeigt, seine Endlage eingenommen hat. Der Bereich 30 stärkerer Neigung eines jeden radial beweglichen Elementes 13 kommt hierbei nämlich zur Anlage an dem etwa hyperbolisch gekrümmten Bereich der inneren Fläche 7 des Kolbens 3. Eine weitere Radialbewegung ist dann nicht mehr möglich.

In der beschriebenen Radiallage der radial beweglichen Elemente 13 liegt jedoch noch eine Überdeckung der geneigten Fläche 26 mit der Fläche 15 der Zugstange 5 vor, so daß die Zugstange 5 daran gehindert wird weiter auswärts zu fahren. Die Zugstange 5 ist damit gesperrt. Die Tangente 34 am Berührungspunkt zwischen der Fläche 7 des Kolbens 3 und der Fläche 25 des radial beweglichen Elementes 13 weist hierbei zur Stirnfläche 39 des Kolbens einen Winkel größer als der Selbsthemmungswinkel auf, so daß eine Bewegung des Kolbens 3 in Richtung des Pfeils 9 auf jeden Fall eine Radialbewegung der radial beweglichen Elemente 13 auslöst. Eine Selbsthemmung darf in dieser Situation, die besonders deutlich in Figur 3 zu sehen ist, nicht auftreten.

Um den Kolben 3 in die in der unteren Hälfte der Figur 2 gezeigten Endlage zu treiben, kann beispielsweis das Zylindergehäuse 1 mit einem Einlaß 40 für ein Strömungsmedium versehen sein. Bewegt sich der Kolben 3 in umgekehrter Richtung, wirkt der Einlaß 40 natürlich als Auslaß.

Das Zylindergehäuse weist einen weiteren Einlaß 41 auf, durch den ebenfalls ein Strömungsmedium in den Zylinderraum des Zylindergehäuses 1 eingebracht werden kann oder durch den bei entsprechender Kolbenbewegung des Kolbens 3 das Strömungsmedium ausgetrieben werden kann.

Ausgehend von der Kolbenlage so wie in der unteren Hälfte der Figur 2 gezeichnet, kann nun ein Strömungsmittel durch den Einlaß 41 in den Zylinderraum des Zylindergehäuses 1 geschickt werden, so daß der Kolben 3 sich aus der in Figur 2 dargestellten Anordnung nach rechts bewegt. Hierdurch wird eine Kraft auf die radial beweglichen Elemente 13 ausgeübt. Ein entsprechendes Kraftdreieck ist in Figur 3 dargestellt. Die auf die radial beweglichen Elemente 13 ausgeübte Kraft verläuft in Richtung der gestrichelten Kraft des Kraftdreiecks, das in Figur 3 dargestellt ist. Diese Kraft teilt sich auf in eine radiale und eine axiale Komponente, so daß das radial bewegliche Element 13 von der Radialkomponente radial einwärts gezwungen wird, wohingegen die Axialkomponente von den Abstützmitteln 17 aufgefangen wird.

Durch die radiale Einwärtsbewegung der radial beweglichen Elemente 13 wird über die Gleitflächen 15 und 26 eine Axialbewegung der Zugstange 5 in Richtung des Zylinderinneren des Zylindergehäuses 1 erzwungen. Die Zugstange 5 wird somit axial nach innen gezogen. Hierdurch kann beispielsweise ein Werkzeugschaft eines Werkzeuges, das in einem Werkzeugmagazin angeordnet ist, fest nach innen und gegen eine Gegenfläche gezogen werden, wobei diese Zugkraft hierbei aufrecht erhalten wird, so daß das Werkzeug spielfrei und sicher gehalten ist. Während der Einwärtsbewegung der Zugstange 5 nämlich erreicht das radial bewegliche Element 13 den Bereich der Fläche 7 der den Winkel 11 kleiner als den Selbsthemmungswinkel aufweist, wobei in diesem Bereich auch die Fläche 25 des radial beweglichen Elementes einen entsprechenden Winkel 28 aufweist. In Figur 1 ist das dann entstehende Kräftedreieck gezeichnet. Da in diesem Bereich der Winkel 28 dem Winkel 11 entspricht, also kleiner als der Selbsthemmungswinkel ist, kann der Kolben 3 in diesem Bereich bei Bedarf druckentlastet werden. Er behält diese Stellung bei, so daß auch beispielsweise bei Druckausfall die auf die Zugstange 5 wirkende Einzugskraft aufrecht erhalten wird. Gleichzeitig ist die Zugstange 5 in ihrer Lage mechanisch arretiert. Soll die Verbindung gelockert werden, so wird einfach der Einlaß 40 mit Druckmedium beaufschlagt, wobei das auf der anderen Kolbenseite zu verdrängende Druckmedium über den Einlaß 41 entweichen kann.

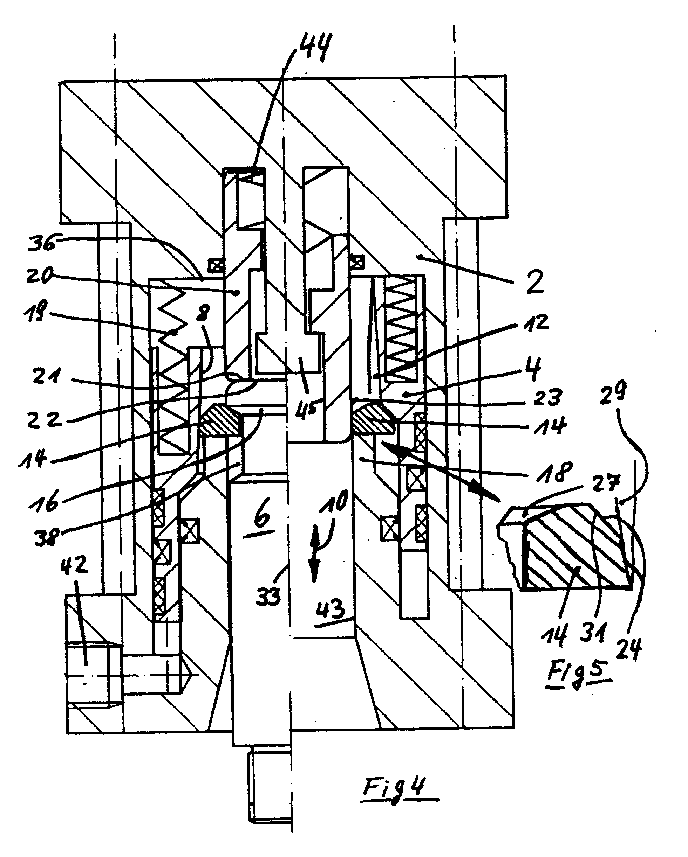

Eine bauliche Ausführungsvariante ist in den Figuren 4 und 5 dargestellt. Diese Bauart macht es zusätzlich möglich, bei Bedarf die zugeordnete Zugstange 6 vollständig aus der Einrichtung zu entnehmen, wobei bei der Bauart nach den Figuren 4 und 5 ein einfaches Einstoßen dieser Zugstange 6 die Einrichtung auslöst und bewirkt, daß die Zugstange, soweit wie die äußeren zu betätigenden Bauelemente dies zulassen, eingezogen wird und die Einzugskraft dann aufrechterhalten wird. Hierzu wird wiederum ein Zylindergehäuse 2 verwendet, in welchem ein Kolben 4 in Richtung des Pfeils 10 verschieblich angeordnet ist. Der Kolben 4 ist als Ringkolben ausgebildet und in üblicher Weise gegen die Zylinderwand des Zylindergehäuses 2 abgedichtet. Von der Vorderseite in das Zylindergehäuse hinein ragen Stützmittel 18, die in axialer Richtung radial bewegliche Elemente 14, ähnlich wie bereits zu den radial beweglichen Elementen 13 beschrieben, axial abstützen. Diese Abstützelemente 18 sind ebenfalls ringförmig ausgebildet und werden im Zylinderinneren von einer inneren Ringfläche des Ringkolbens 4 umfaßt, wobei die innere Fläche des Ringkolbens 4 gegen die äußere Ringfläche dieser Abstützmittel 18 abgedichtet ist. Das Ausführungsbeispiel nach Figur 2 ist so ausgebildet, daß der Ringkolben 4 in Löserichtung strömungsmittelbetätigt ist, so daß das Zylindergehäuse 2 einen entsprechenden Strömungsmitteleinlaß 42 aufweist. In Spannrichtung ist der Ringkolben 4 von elastischen Elementen 19 beaufschlagt, die im Ausführungsbeispiel als Druckfeder ausgebildet sind. Diese Druckfeder stützt sich einerseits am inneren Zylinderboden 36 und andererseits an einer Stirnfläche oder vertieften Stirnfläche des Ringkolbens 4 ab. Der Ringkolben 4 weist eine innere Fläche 8 auf, die mit der Mittellinie 33 einen Winkel 12 kleiner als der Selbsthemmungswinkel bildet. Von der Stirnseite des Ringkolbens ausgehend schließt sich dieser Fläche 8 ein kurzer Bereich stärkerer Neigung an, der in den zylindrischen Bereich des Ringkolbens 4 übergeht, mit dem dieser an der äußeren Zylinderwand des Abstützmittels 18 abgedichtet ist.

Im Bereich der Abstützmittel 18 ist eine axiale Bohrung 43 vorgesehen, in welche die Zugstange 6 eingeführt ist. Die Zugstange 6 weist an ihrem inneren Ende in zu den Figuren 1 bis 3 bereits beschriebener Weise einen Ringkanal 38 auf, der zum Ende der Zugstange 6 hin von einer radial nach innen gerichteten geneigten Fläche 16 begrenzt wird. Diese geneigte Flächen 16 bildet wiederum die Mantelfläche eines Kegelstumpfs. In Sperrstellung (Figur 4 linke Hälfte) liegen radial bewegliche Elemente 14, im Ausführungsbeispiel als Kreisringsegmente ausgebildet, mit ihrer Fläche 27 (Figur 5) an der Fläche 16 an. Beide Flächen haben sich entsprechende Neigung.

In seinem äußeren Bereich weist jedes Kreisringsegment 14 eine äußere Fläche 24 zur Zusammenarbeit mit der entsprechenden Fläche 8 des Ringkolbens 4 und der sich daran anschließenden kurzen kegelstumpfförmigen Fläche mit größerer Neigung auf. Letztere ist gedacht zur Zusammenarbeit mit der entsprechend geneigten Fläche 31 des Kreisringsegments 14. Der schwächer geneigte Flächenbereich der Fläche 24 weist einen Winkel 29, auf der dem Winkel 12 der Fläche 8 des Ringkolbens 4 entspricht.

Koaxial in den Zylinderraum des Zylindergehäuses 4 hinein ragt ein weiteres Element 20, das axial verschieblich angeordnet ist und unter der Vorlast elastischer Elemente 44 steht, die dieses weitere Element 20 axial ins Innere des Zylindergehäuses 4 treiben wollen. Ein innerer Anschlag 45 sorgt für die Begrenzung dieser Axialverschiebung. Aufgrund der Vorlast durch die elastischen Elemente 44 bleibt die Stirnfläche 21 des weiteren Elementes 20 in Anlage an der Stirnfläche 22 der Zugstange 6, wenn diese sich in Spannlage befindet. Diese Spannlage ist in der linken Hälfte der Figur 4 dargestellt. Hierbei ist der Ringkolben 4 von den elastischen Elementen 19 in Axialrichtung (Pfeil 10) nach vorne in Richtung der Öffnung des Zylindergehäuses 2 geschoben worden und hat dabei zunächst über den Flächenbereich 31 der Kreisringsegmente 14 und nachfolgend in Zusammenarbeit zwischen den Flächen 8 des Ringkolbens 4 und dem entsprechend geneigten Flächenteil der Fläche 24 des Kreisringsegmentes 14 alle Kreisringsegmente 14 radial nach innen verschoben, so daß in weiterer Zusammenarbeit zwischen den Flächen 27 der radial beweglichen Elemente 14 und der Fläche 16 der Zugstange 6 diese einwärts gezogen und nach Erreichen eines äußeren Anschlags unter Zugkraft gehalten wird.

Es kann nun auch die Einrichtung gelöst und bei vollständiger Lösung die Zugstange 6 leicht entnommen werden. Hierzu wird der Ringkolben 4 an seiner entsprechenden Stirnseite über den Einlaß 42 mit Strömungsmedium beaufschlagt, so daß der Ringkolben 4 sich entgegen der Kraft der elastischen Elemente 19 einwärts bewegt. Dies kann so weit erfolgen, daß die innere Stirnfläche des Ringkolbens 4 am inneren Zylinderboden 36 zur Anlage kommt. Hierdurch können die Kreisringsegmente 14 radial nach außen wandern und schließlich die Lage einnehmen, die in Figur 4 rechte Hälfte dargestellt ist. Dies kann dadurch erreicht werden, daß eine kleine Zugbelastung auf die Zugstange 6 ausgeübt wird, so daß diese sich nach auswärts bewegen will. Über die Fläche 27 der Kreisringsegmente 14 werden diese dann durch Anlage an der Fläche 16 der Zugstange 6 radial nach außen bewegt. Mit der Auswärtsbewegung der Zugstange 6 folgt dieser aber aufgrund der Vorlast durch die elastischen Elemente 44 das weitere Element 20 nach so lange, bis dieses weitere Element 20 über seine äußere Umfangsfläche 23 die Kreisringsegmente 14 in der in Figur 4 rechte Hälfte dargestellten Position abstützen kann. Die Kreisringsegmente 14 können dann, wenn die Zugstange 6 aus dem Zylinderinnenraum des Zylindergehäuses 2 entfernt ist, nicht radial zusammenfallen. Es kann nun in dieser Stellung auch die entsprechende Stirnseite des Ringkolbens 4 vom Druck des Strömungsmediums entlastet werden und es kann dann dennoch der Kolben 4 nicht unter der Vorlast der elastischen Elemente 19 axial bewegt werden, weil hierzu eine entsprechende Radialbewegung der Kreisringsegmente 14 erforderlich wäre, die jedoch wegen der Anlage an der Fläche 23 des weiteren Elementes 20 nicht erfolgen kann. In dieser Lösestellung ist somit der Ringkolben 4 blockiert. Um diese Situation zu erreichen, bedarf es nur einer sehr geringen Kraft der elastischen Elemente 44. Dies macht es auch einfach, das weitere Element 20 gegen die Kraft der elastischen Elemente 44 wieder einwärts zu bewegen. Es ist sehr einfach eine andere Zugstange 6 einzuführen und mit der entsprechenden Stirnfläche 22 über die Stirnfläche 21 des weiteren Elementes 20 dieses wieder axial zurückzudrücken, so daß die radial beweglichen Elemente 14 wieder in den Bereich des Ringkanals 38 kommen und sich damit radial einwärts bewegen können. Hierdurch setzt automatisch der Einzugs- und Spannvorgang wieder ein, denn die elastischen Elemente 19 können nun den Ringkolben 4 wieder axial bewegen. Ist somit beispielsweise die Zugstange 6 Aufnahmeelement eines Werkzeugs in einem Werkzeugträger, wobei das Werkzeug im Werkzeugträger bis zu einem vom Werkzeugträger vorgegebenen Anschlag eingezogen und dort unter Vorlast sicher gehalten werden muß, so muß diese Zugstange 6 nur einfach in den Zylinder des Zylindergehäuses 2 leicht eingedrückt werden und wird dadurch sofort vollständig eingezogen und unter Beibehaltung der Vorlast verriegelt. Die Verriegelung ist hierbei mechanisch formschlüssig und damit unlösbar und wird, solange bewußt der Lösevorgang nicht geschaltet wird, unabhängig von irgendwelchen äußeren Beeinflussungen beibehalten.

## Ansprüche

1.  Druckmittelbetätigte Spanneinrichtung mit:

    1.1 einem Zylindergehäuse (1,2) mit Zylinderboden (35,36);

    1.2 einem im Zylindergehäuse (1,2) gleitend geführten Kolben (3,4) mit einem inneren Hohlraum;

    1.3 einer mit einem Ende in den Hohlraum hineinragenden, koaxial zum Kolben (3,4) verschiebbaren und einseitig aus dem Zylindergehäuse (1,2) austretenden Zugstange (5,6), die

    1.3.1 in diesem inneren Endabschnitt mit einem umlaufenden Ringkanal (37,38) ausgebildet ist, der zum inneren freien Ende der Zugstange (5,6) hin eine ansteigende Schrägfläche (15,16) aufweist, die einen Kegelstumpfabschnitt der Zugstange (5,6) bildet; sowie

    1.4 zwischen Zustange (5,6) und Kolben (3,4) im Bereich des Ringkanals (37,38) angeordneten und radial bewegbaren Elementen (13,14) , die mit einer äußeren Fläche (25,24) mit einer in entgegengesetzter Richtung zur Schrägfläche (15,16) geneigten innenseitigen Fläche (7,8) des Kolbens (3,4) , mit einer inneren Fläche (26,27) mit der Schrägfläche (15,16) zusammenwirken und über gehäuseseitige Abstützmittel (17,18) axial gehalten sind, wobei

1.4.1 die innenseitige Fläche (7,8) des Kolbens (3,4) zumindest über einen Teil ihrer Längserstreckung zur Verschieberichtung (9,10) der Zugstange (5,6) bezogen auf die äußere Fläche (25,26) der Elemente (13,14) einen Winkel (11,12) kleiner als den Selbsthemmungswinkel bildet; und wobei

1.5 der Kolben (3,4) bei seiner Spannhubbewegung durch die zusammenwirkenden Flächen (7,8; 25,24) des Kolbens beziehungsweise der Elemente (13,14) eine radial einwärts gerichtete Bewegung der Elemente (13,14) erzeugt , die ihrerseits mittels der zusammenwirkenden Flächen (26,27; 15,16) der Elemente (13,14) beziehungsweise der Zugstange (5,6) eine gleichzeitig einwärts gerichtete Zugbewegung der Zugstange (5,6) bewirkt, und der Kolben (3,4) bei seiner durch Druckmittelbeaufschlagung erfolgenden Bewegung in Löserichtung eine radial auswärts gerichtete Bewegung der Elemente (13,14) unter gleichzeitiger Rückführung der Zugstange (5,6) in die Ausgangsposition ermöglicht.

2. Einrichtung nach Anspruch 1, dadurch gekennzeichnet, daß der Kolben (4) in Spannrichtung federbelastet (19) ist.

3. Einrichtung nach einem der Ansprüche 1 oder 2, dadurch gekennzeichnet, daß koaxial zur Zugstange (6) ein weiteres Element (20) unter axialer Vorlast gegen die Zugstange (6) axial verschiebbar in das Zylindergehäuse (2) zur flächigen Anlage mit seiner Stirnfläche (21) an der korrespondierenden Stirnfläche (22) der Zugstange (6) hineinragt, wobei das weitere Element (20) mindestens eine Fläche (23) zur Abstützung der radial beweglichen Elemente (14) aufweist.

4. Einrichtung nach einem der Ansprüche 1 bis 3, dadurch gekennzeichnet, daß die Elemente als Kugeln oder Kreisringsegmente (13,14) ausgebildet sind, mit je einer äußeren, mit der Fläche (7,8) des Kolbens (3,4) korrespondierenden Fläche (24,25) sowie mit einer weiteren, mit der Fläche (15,16) an der Zugstange (5,6) zusammenwirkenden Fläche (26,27).

5. Einrichtung nach Anspruch 4, dadurch gekennzeichnet, daß die Querschnittslinie der äußeren Fläche der Kreisringsegmente (13,14) im äußersten Bereich zur Verschieberichtung der Zugstange (5,6) einen Winkel (28,29) kleiner als der Selbsthemmungswinkel bildet, dem sich ein Bereich stärkerer Neigung anschließt.

6. Einrichtung nach einem der Ansprüche 1 bis 5, dadurch gekennzeichnet, daß die innere Fläche (7,8) des Kolbens (3,4) in Löserichtung einen größer werdenden Radialabstand zur Mittellinie (32,33) der Zugstange (5,6) aufweist.

7. Einrichtung nach Anspruch 6, dadurch gekennzeichnet, daß die innere Mantelfläche des Kolbens (3) die Form eines Hyperboloids aufweist.

8. Einrichtung nach einem der Ansprüche 1 bis 7, dadurch gekennzeichnet, daß in jeder radialen Außenlage (Figur 3) der radial beweglichen Elemente (13) die Tangente (34) im Berührungspunkt von innerer Fläche (7) des Kolbens (3) und äußerer Fläche (25) eines Segmentes (13) mit der Senkrechten zur Mittellinie einen Winkel bildet, der größer als der Selbsthemmungswinkel ist.

9. Einrichtung nach einem der Ansprüche 1 bis 8, dadurch gekennzeichnet, daß die Einrichtung eine Hubbegrenzung für den Kolben (3,4) aufweist.

10. Einrichtung nach Anspruch 9, dadurch gekennzeichnet, daß die Hubbegrenzung so angeordnet ist, daß sie in einer Kolbenlage, in der die radial beweglichen Elemente (13,14) in ihrer äußersten radialen Lage (Figur 3) noch eine Teilüberdeckung mit der radial nach innen gerichteten Fläche (15) der Zugstange (5) aufweisen, wirkt.

11. Einrichtung nach Ansprch 10, dadurch gekennzeichnet, daß die Hubbegrenzung vom Zylinderboden (35,36) des Zylindergehäuses (1,2) gebildet wird.

12. Einrichtung nach einem der Ansprüche 9 bis 11, dadurch gekennzeichnet, daß die Hubbegrenzung einstellbar ist.

## Claims

1. A pressure actuated clamping device, including:

   1.1 a cylinder housing (1,2) with a bottom (35,36);

1.2 a piston (3,4) with an inner hollow, slidably movable in said hollow cylinder housing (1,2);

1.3 a pull rod (5,6) , slidable coaxially with respect to said piston (3,4) and arranged with one end within said hollow and protruding the cylinder housing (1,2) at its other end,

1.3.1 said pull rod (5,6) being equipped at this inner end part with a circumferential ring groove (37,38) with a slanted surface (15,16) , ascending in direction of the inner free end of said pull rod (5,6), said slanted surface forming a jacket of a conical frustum of the pull rod (5,6); as well as

1.4 elements (13,14), positioned between said pull rod (5,6) and said piston (3,4) in the area of said ring groove (37,38) and movable in radial direction, cooperating with an outer surface (25,24) with an inner surface (7,8) of said piston (3,4) being inclined in opposite direction to said slanted surface (15,16) and with an inner surface (26,27) with said slanted surface (15,16) and being axially positioned by supporting means (17,18) arranged within said housing, whereby

1.4.1 at least part of the inner surface (7,8) of said piston (3,4) seen in a longitudinal direction and the outer surface (25,26) of said elements (13,14) forming an angle (11,12) with respect to the moving direction (9,10) of the pull rod (5,6) being smaller than the self-locking angle, whereby

1.5 the piston (3,4) , when activated, urges a radially inward movement of the elements (13,14) by the contact of said corresponding surfaces (7,8;25,24) of said piston and said elements; respectively, causing at the same time an inward movement of said pull rod (5,6) by said corresponding surfaces (26,27;15,16) of said elements (13,14) and said pull rod (5,6) respectively, the piston (3,4) enabling by its movement in loosening direction, caused by a pressure medium, a radially outward movement of said elements (13,14) while at the same time restoring the pull rod (5,6) in its initial position.

2. Device according to claim 1, characterized in that the piston (4) is spring loaded in clamping direction.

3. Device according to one of claims 1 or 2, characterized in that coaxially to said pull rod (6) a further element (20) is positioned within said cylinder housing (2), axially prestressed against said pull rod (6) and axially movable, for contacting with its front surface (21) the corresponding front surface (22) of said pull rod (6), said further element (20) presenting at least one surface (23) for supporting the radially movable elements (14).

4. Device according to one of claims 1 to 3, characterized in that the elements are designed as balls or circular ring segments (13,14), each with an outer surface (24,25), corresponding to the surface (7,8) of said piston (3,4) and a further surface (26,27), cooperating with said surface (15,16) of said pull rod (5,6).

5. Device according to claim 4, characterized in that the cross-sectional line of the outer surface of said circular ring segments (13,14) in the extreme outer part with respect to the moving direction of the pull rod (5,6) forms an angle (28,29) smaller than the self locking angle, followed by an area of greater inclination.

6. Device according to one of claims 1 to 5, characterized in that the inner surface (7,8) of said piston (3,4) presents an increasing radial distance to the central axis (32,33) of the pull rod (5,6) in the loosening direction.

7. Device according to claim 6, characterized in that the inner surface of said piston (3) presents a hyperbolic form.

8. Device according to one of claims 1 to 7, characterized in that in each radial outer position (figure 3) of the radially movable elements (13) the tangent line (34) through a point of contact between said inner surface (7) of said piston (3) and the outer surface (25) of a segment (13) and a line vertical to the central axis form an angle greater than the self locking angle.

9. Device according to one of claims 1 to 8, characterized in that the device comprises stroke limit stop means for said piston (3,4).

10. Device according to claim 9, characterized in that the stroke limit stop means are arranged in such a way that it is actuated in a position of said piston, in which the radially movable elements (13,14) in their extreme radial position (figure 3) are still partly covered by said radially inner surface (15) of the pull rod (5).

11. Device according to claim 10, characterized in that the stroke limit stop means are formed by the cylinder bottom (35,36) of said cylinder housing (1,2).

12. Device according to one of claims 9 to 11, characterized in that the stroke limit stop means are adjustable.


**Revendications**

1. Dispositif de serrage à actionnement pneumatique comportant :

   1.1 une enveloppe cylindrique (1, 2) avec fond de cylindre (35, 36);

   1.2 un Piston (3, 4) présentant une cavité intérieure, guidé coulissant dans l'enveloppe cylindrique (1, 2);

   1.3 une tige de traction (5, 6) pénétrant par une extrémité dans la cavité, coulissant coaxialement avec le piston (3, 4) et dépassant d'un côté de l'enveloppe cylindrique (1, 2), laquelle tige

      1.3.1 présente, dans cette section terminale intérieure, un canal annulaire (37, 38) continu qui possède une surface oblique (15, 16) montant vers l'extrémité libre intérieure de la tige de traction (5, 6) et qui forme une section tronconique de la tige de traction (5, 6) , ainsi que

   1.4. des éléments (13, 14) mobiles radialement, disposés entre la tige de traction (5, 6) et le piston (3, 4), dans la région du canal annulaire (37, 38) et qui coopèrent, par une surface extérieure (25, 24), avec une surface (7, 8) du piston (3, 4), inclinée vers l'intérieur dans le sens opposé à la surface oblique (15, 16), et coopèrent, par une surface intérieure (26, 27), avec la surface oblique (15, 16) et sont maintenus axialement par des moyens d'appui (17, 18) côté enveloppe,

      1.4.1. la surface intérieure (7, 8) du piston (3, 4) formant, au moins sur une partie de son extension longitudinale, dans le sens du coulissement (9, 10) de la tige de traction (5, 6), par rapport à la surface extérieure (25, 26) des éléments (13, 14), un angle (11,12) inférieur à l'angle d'autoblocage et

      1.5 le piston (3, 4), lors de sa course de serrage, produisant un déplacement, dirigé radialement vers l'intérieur des éléments (13, 14), du fait des surfaces coopérantes (7, 8; 25, 24) du piston ou des éléments (13, 14), le déplacement simultanément entrainant un déplacement en traction de la tige de traction (5, 6) dirigé vers l'intérieur, au moyen des surfaces coopérantes (26, 27; 15, 16) des éléments (13, 14) ou de la tige de traction (5, 6) et le piston (3, 4) autorisant, lors de son déplacement dans le sens du déverrouillage, dû à l'action du fluide sous pression, un déplacement des éléments (13, 14), dirigé radialement vers l'extérieur, ainsi qu'un rappel simultané de la tige de traction (5, 6) dans sa position initiale.

2. Dispositif selon la Revendication 1, caractérisé en ce que le piston (4) est soumis à l'action d'un ressort (19) dans le sens du serrage.

3. Dispositif selon la Revendication 1 ou 2, caractérisé en ce que coaxialement à la tige de traction (6), un autre élément (20) s'engage dans l'enveloppe cylindrique (2), sous précontrainte axiale et coulissant axialement vers la tige de traction (6) , pour s'appliquer, en vue d'un appui surfacique, par sa face frontale (21) contre la face frontale (22) correspondante de la tige de traction (6), l'autre élément (20) présentant au moins une surface (23) en vue de l'appui des éléments (14) mobiles radialement.

4. Dispositif selon l'une des Revendications 1 à 3, caractérisé en ce que les éléments sont constitués par des billes ou des segments d'anneau circulaire (13, 14) présentant chacun une surface (24, 25) extérieure, correspondant à la surface (7, 8) du piston (3, 4) ainsi qu'une autre surface (26, 27) coopérant avec la surface (15, 16) de la tige de traction (5, 6).

5. Dispositif selon la Revendication 4, caractérisé en ce que la ligne de section transversale de la surface extérieure des segments d'anneau circulaire (13, 14) forme, dans la région la plus extérieure par rapport au sens de coulissement de la tige de traction (5, 6), un angle (28, 29) inférieur à l'angle d'autoblocage auquel fait suite une région de plus forte pente.

6. Dispositif selon l'une des Revendications 1 à 5, caractérisé en ce que la surface intérieure (7, 8) du piston (3, 4) présente une distance radiale augmentant vers la ligne médiane (32, 33) de la tige de traction (5, 6), dans le sens du déverrouillage.

7. Dispositif selon la Revendication 6, caractérisé en ce que la surface d'enveloppe intérieure du piston (3) a la forme d'un hyperboloïde.

8. Dispositif selon l'une des Revendications 1 à 7, caractérisé en ce que, dans chaque position extérieure radiale (Figure 3) des éléments (13) mobiles radialement la tangente (34) forme un angle, au point de contact de la surface intérieure (7) du piston (3) et de la surface extérieure (25) d'un segment (13) avec la perpendiculaire à la ligne médiane, angle qui est supérieur à l'angle d'autoblocage.

9. Dispositif selon l'une des Revendications 1 à 8, caractérisé en ce que le dispositif présente une limitation de course pour le piston (3, 4).

10. Dispositif selon la Revendication 9, caractérisé en ce que la limitation de course est telle qu'elle agit dans une position du piston dans laquelle les éléments (13, 14) mobiles radialement, dans leur position radiale la plus extérieure (Figure 3), présentent encore un recouvrement partiel avec la surface (15) dirigée radialement vers l'intérieur, de la tige de traction (5).

11. Dispositif selon la Revendication 10, caractérisé en ce que la limitation de course est formée par le fond de cylindre (35, 36) de l'enveloppe cylindrique (1, 2).

12. Dispositif selon l'une des Revendications 9 à 11, caractérisé en ce que la limitation de course est réglable.

Fig 1

Fig 2

Fig 3

44

36
20
19
8
21
22
14
16
38
42
6
33
45
10
43
2
12
4
23
14
18

29
27
31
24
14

Fig 5

Fig 4